(19) Europäisches Patentamt / European Patent Office / Office européen des brevets

(11) **EP 3 794 245 B1**

(12) **EUROPÄISCHE PATENTSCHRIFT**

(45) Veröffentlichungstag und Bekanntmachung des Hinweises auf die Patenterteilung:
**21.12.2022   Patentblatt 2022/51**

(21) Anmeldenummer: **19724398.3**

(22) Anmeldetag: **09.05.2019**

(51) Internationale Patentklassifikation (IPC):
**F16D 27/14** (2006.01)

(52) Gemeinsame Patentklassifikation (CPC):
**F16D 27/14;** F16D 2027/002

(86) Internationale Anmeldenummer:
**PCT/EP2019/061966**

(87) Internationale Veröffentlichungsnummer:
**WO 2019/219509 (21.11.2019 Gazette 2019/47)**

(54) **ANTRIEBSSYSTEM MIT ELEKTROMAGNETISCHEM SCHALTAKTUATOR UND VERFAHREN ZUM STEUERN DESSELBEN**

DRIVE SYSTEM WITH ELECTROMAGNETIC SWITCHING ACTUATOR AND METHOD OF CONTROLLING THE SAME

SYSTEME D'ENTRAINEMENT AVEC ACTIONNEUR DE COMMUTATION ELECTROMAGNETIQUE ET SON PROCEDE DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2018   DE 102018207590**

(43) Veröffentlichungstag der Anmeldung:
**24.03.2021   Patentblatt 2021/12**

(73) Patentinhaber: **Magna PT B.V. & Co. KG**
**74199 Untergruppenbach (DE)**

(72) Erfinder:
• **GRAFLEITNER, Klaus**
**4225 Luftenberg (AT)**
• **KOHLHAUSER, Matthias**
**8072 Fernitz (AT)**
• **SCHWEIGER, Wolfgang**
**9431 St. Stefan (AT)**
• **GAGLA, Konrad**
**8321 St. Margarethen/Raab (AT)**
• **DJAK, Mario**
**8055 Graz (AT)**
• **JANTSCHER, Simon**
**8046 Stattegg (AT)**

(74) Vertreter: **Zangger, Bernd**
**Magna International Europe GmbH**
**Patentabteilung**
**Liebenauer Hauptstraße 317**
**8041 Graz (AT)**

(56) Entgegenhaltungen:
DE-A1-102011 010 616       JP-A- 2010 120 529
JP-B2- 4 061 763       US-A1- 2005 153 813

**Beschreibung**

Die Erfindung betrifft ein Antriebssystem mit elektromagnetischen Schaltaktuator sowie ein Verfahren zum Steuern desselben.

Stand der Technik

Zur Verbesserung der Fahrdynamik finden bei Kraftfahrzeugen Antriebsstränge Anwendung, die sich an die jeweils vorliegenden Fahrbedingungen anpassen lassen. Dabei gelangen oftmals Trennkupplungen zum Einsatz, die unter anderem dazu dienen, bestimmte Komponenten des Antriebsstrangs selektiv miteinander zu koppeln oder voneinander zu trennen. Beispielsweise kann es bei Hybridfahrzeugen in bestimmten Fahrsituationen vorteilhaft sein, einen Elektromotor des Hybridantriebs von den anderen Komponenten des Antriebsstrangs zu trennen, etwa wenn ein Verbrennungsmotor des Hybridantriebs das geforderte Antriebsdrehmoment liefert und die Antriebsleistung des Elektromotors nicht benötigt wird. Durch eine Trennkupplung kann auch eine Sicherheitsabschaltung bei Betriebsstörungen sichergestellt werden. Letztlich tragen derartige Trennkupplungen somit zur Verbesserung des Gesamtwirkungsgrades des Antriebsstrangs, der Fahrdynamik, des Verhaltens des Fahrzeugs bei einem ESP-Eingriff und des Verhaltens bei Betriebsstörung der elektrischen Traktionskomponenten bei.

Damit die Vorteile der Trennkupplung in möglichst großem Umfang zum Tragen kommen, ist deren effiziente Ansteuerung von wesentlicher Bedeutung. Insbesondere soll ein Einrücken der Kupplung möglichst schnell und zuverlässig erfolgen, damit der Antriebsstrang schnell an geänderte Fahrzustände angepasst werden kann.

Die E-Drive Anwendungen bieten neue Möglichkeiten für eine in Bezug auf Kosten, Energieeffizienz und Bauraum optimierte Auslegung von Schaltaktuatoren für die Betätigung schaltbarer, formschlüssiger Kupplungen zum bedarfsgerechten Koppeln oder Entkoppeln der elektrischen Maschine von dem restlichen Antriebsstrang.

Beispielsweise kann bei Connect-Schaltungen, durch Synchronisierung über Drehzahlregelung der elektrischen Maschine des Fahrzeugantriebs, das Differenzdrehzahlfenster sehr klein gehalten und präzise eingehalten werden. Differenzdrehzahlen von <10 - 25 rpm sind möglich, aber aus Schaltkomfortgründen wird eine Unterschreitung dieser Werte gewünscht oder gefordert. Diese Forderung setzt präzise Drehzahlinformationen ohne zeitlichen Signalverzug voraus.

Die Drehzahlinformationen sind bereits vorhanden, da sie zur Implementierung diverser Komfortfunktionen z.B. aktive Kompensation von Massenträgheitsmomenten, aktive Dämpfung etc. ohnehin bereits verwendet und beispielsweise durch das direkte Einlesen der Raddrehzahlsignale in das Inverter Control Board der elektrischen Maschine zur Verfügung gestellt werden.

Dadurch, dass die Differenzdrehzahlen beim Koppeln und Entkoppeln so gering sind, können die Betätigungskräfte für das Koppeln entsprechend klein gehalten werden. Aus dem Stand der Technik sind unterschiedliche Aktuatoren bekannt.

Aus der DE 10 2011 010 616 A1 ist ein Aktuator mit Spindelantrieb bekannt. Verschiedene Ausführungen besitzen eine Schnecken- oder Stirnrad-Getriebestufe und Kugel- oder Gleitrampe. Nachteilig an den Ausführungen sind dabei der große Bauraum und das hohe Gewicht des Aktuatormotors. Konventionelle Bürstenmotoren sind nur für eine eingeschränkte Anzahl an Schaltzyklen (Überrollungen) geeignet und BLDC/PMSM-Motoren sind kostenintensiv.

Direkt wirkende elektromagnetische Aktuatorsysteme mit Ringspulenmagnet sind kostenintensiv (hoher Cu-Anteil der Ringspule), bringen ein erhöhtes Gewicht mit sich (Eisenkern) und haben Einschränkungen hinsichtlich max. Hub bzw. max. Schaltkräfte und erreichbarer Schaltdynamik (hohe Induktivitäten bei großer Spule).

Konventionelle hydraulische Aktivierungen umfassen im Allgemeinen zumindest einen elektrischen Antriebsmotor, eine Verdrängerpumpe, ein Druckbegrenzungsventil, ein Magnetventil (schaltend oder regelnd) und einen Öltank. Somit ist eine Vielzahl an Einzelkomponenten erforderlich die über einen Ventilblock (elektrohydraulisches Power-Pack) oder entsprechende Hydraulikleitungen miteinander verbunden werden müssen, wodurch i.a. hohe Fertigungs- und Montagekosten sowie ein großer Bauraumbedarf resultieren.

Weiterhin ist ein elektrohydraulischer Aktuator als geschlossenes hydraulisches Aktuatoriksystem bekannt, bestehend aus BLDC-Motor, Kugelumlaufspindel, Druckkolben und Sensorik, wobei die hohen Kosten des Systems von Nachteil sind.

Das Dokument JP 4 061763 B2 offenbart ein Antriebssystem für ein Kraftfahrzeug mit zumindest einer zuschaltbaren elektrischen Antriebsmaschine, einem Inverter und einer Aktuatoranordnung, die der Anbindung der elektrischen Antriebsmaschine dient. Ein Inverter enthält Leistungsendstufen für die elektrische Antriebsmaschine wie auch für die Aktuatoranordnung, die im gleichen oder unterschiedlichen Spannungsbereich arbeiten.

Es ist Aufgabe der Erfindung Antriebssystem mit elektromagnetischem Schaltaktuator und ein Verfahren zum Steuern des Schaltaktuator zu schaffen das die Nachteile des Standes der Technik überwindet.

Gelöst wird die Aufgabe mit einem Antriebssystem, nach Anspruch 1, in einem Kraftfahrzeug mit zumindest einer zuschaltbaren elektrischen Antriebsmaschine, einem Inverter und einer Aktuatoranordnung zur Anbindung der elektrischen Antriebsmaschine, wobei ein Inverter Leistungsendstufen für die elektrische Antriebsmaschine und die Aktuatoranordnung enthält, die im gleichen oder unterschiedlichen Spannungsbereich arbeiten, wobei die Aktuatoranordnung einen elektromagnetischen Schaltaktuator und eine Klauenkupplung aufweist, wobei ein elektromagnetischer Antrieb eine Schaltstange linear bewegt, die mit einer Schwenkschaltgabel kraftwirksam verbunden ist.

Durch die Verwendung angepasster Spannungsbereiche und die Verwendung von Hochvoltendstufen erhält man eine höhere Leistungsdichte als im konventionellen Designs und kann die Komponenten darauf optimal anpassen.

Die Anforderungen an den Bauraum bleiben dabei gleich und es ist zudem möglich das Spulendesign in der Aktuatoranordnung kostenneutral unter Verwendung gleicher Kupfermassen zu gestalten.

Die lineare Anordnung weist Vorteile bezüglich des Gewichts und der Kosten gegenüber konventionellen elektromotorischen Antrieben wie einem DC Motor oder einem BLDC Motor auf.

Es ist besonders vorteilhaft, dass mindestens einer der Spannungsbereiche ein Hochvoltbereich ist. Durch die Integration in den Inverter sind kurze Kabelverbindung zwischen den Leistungsendstufen und der Aktuatoranordnung möglich.

Es ist von Vorteil, dass der Inverter eine Steuerelektronik für die elektrische Antriebsmaschine und die Aktuatoranordnung enthält. Durch die Kombination der verschiedenen Funktionen und Integration dieser Funktionen in einem Bauteil kann die Teilezahl, sowie die Teilekomplexität und der Montageaufwand deutlich reduziert werden.

Es ist dabei von Vorteil, dass die Schaltstange von mindestens einem Stütz-Gleitelement oder Führungselement umfasst ist, das sich im Gehäuse des Schaltaktuators gleitend linear bewegt. Durch die geringe Anzahl an Bauteilen und die einfache Ausführung der Bauteile wird die Montage vereinfacht und die Kosten reduziert.

Dabei ist es von Vorteil, dass der die Schaltstange über eine Ankerstange oder direkt am elektromagnetischen Antrieb kraftwirksam angebunden ist. Vorteilhafterweise bildet das Stütz-Gleitelement oder Führungselement einen Anschlag für mindestens eine Pufferfeder aus.

Es ist von Vorteil, dass das Stütz-Gleitelement oder Führungselement einen zusätzlichen Anschlag für eine Rückstellfeder bildet. Über die Verwendung der Federn wird ein unterschiedliches "Fail-Safe"-Verhalten realisierbar, in dem ein einfach wirkender Hubmagnet mit Rückstellfeder, ein bistabiler Hubmagnet oder ein doppelwirkender Magnet eingesetzt wird.

Es ist von Vorteil, dass die Pufferfeder und/oder die Rückstellfeder Spiralfedern mit konstantem Radius oder abnehmenden Radius sind. Durch die Verwendung von Federn mit einer progressiven Kennlinie ist eine hohe Energieeffizienz zu erreichen, da sie an die Kraft-Hubcharakteristik des Hubmagneten angepasst sind. Um Bauteile einzusparen ist es vorteilhaft, dass das Stütz-Gleitelement eine Schalthülse für eine Schenkschaltgabel umfasst oder das Führungselement einteilig mit der Schalthülse ausgebildet ist.

Prinzipiell weist die Anordnung eine hohe Flexibilität für die Ausgestaltung der Kombination Schaltaktuator und Klauenkupplung auf. Die Schaltgabel kann dabei prinzipiell über 360° um die Klauenachse geschwenkt sein.

Die Aufgabe wird weiterhin gelöst mit einem Verfahren, nach Anspruch 10, zur Ansteuerung eines erfindungsgemäßen Antriebssystems, wobei durch Messung des an der Elektromagnetspule des Schaltaktuators fließenden Spulenstroms in der Steuerelektronik oder auch extern detektiert wird, um die Endposition des Schaltaktuators beim Einkuppeln zu bestimmen.

Durch das Verfahren ist eine einfache Abfrage der Ankerposition über Strommessung möglich. Das gesamte Verfahren belastet das Bordnetz durch Verwendung von optimalen Stromprofilen nur minimal.

Es ist von Vorteil, dass eine Verifizierung der Endposition durch Stellen eines Drehmoments des elektrischen Antriebmotors erfolgt. Durch die Adaptiveinstellung der Stromprofile wird die Robustheit für Einkuppel- und Auskuppelvorgänge erhöht.

Weiterhin ist es von Vorteil, dass durch eine Ansteuerung des elektrischen Antriebsmotors bei eingeleitetem Anlagewechsel der Zahnflanken von Klauenring und Schaltmuffe einen Zahn-Zahn-Stellung vermieden wird. Durch die Integration der Steuerung sowohl des Aktuators als auch des elektrischen Antriebsmotors ist es möglich, die Schaltprozesse so belastungsfrei wie nur möglich zu gestalten.

Dabei ist es von Vorteil, dass die Drehzahlen an den Wellen der Klauenkupplung bestimmt werden und für das Auslegen der Kupplung verwendet werden. Durch Verwendung der bereits vorhandenen Daten und deren Auswertung in der gemeinsamen Steuerung wird die Belastung für die Kupplung minimiert und der Schaltaktuator kann für geringere Belastungen ausgelegt sein.

Das erfindungsgemäße Verfahren erlaubt es, eine Blockade der Zähne durch ein am Schaltaktuator aufgebrachtes Strommuster aufzurütteln.

Weiterhin ist das erfindungsgemäße Verfahren zur vollaktiven, elektromagnetischen Betätigung von schaltbaren formschlüssigen Kupplungssystemen in unterschiedlichen Ausführungen (z.B. dog clutch, dog sleeve, fly balls) auf Achs-, Halbellen- oder Zwischenwellenniveau geeignet.

Beschreibung der Erfindung

Die Erfindung wird nachfolgend beispielhaft unter Bezugnahme auf die beigefügte Zeichnung beschrieben.

Fig. 1 zeigt eine isometrische Ansicht der ersten Ausführungsform der Aktuatoranordnung.

Fig. 2 zeigt eine Stirnansicht der Aktuatoranordnung (Ansicht X in Fig. 1).

Fig. 3 zeigt eine isometrische Ansicht der Aktuatoranordnung ohne Schaltaktuator.

Fig. 4 zeigt eine isometrische Ansicht des Schaltaktuators.

Fig. 5 zeigt eine Stirnansicht des Schaltaktuators (Ansicht Y in Fig. 4).

Fig. 6 zeigt eine Querschnittsansicht des Schaltaktuators, entlang der Schnittlinie E-E in Fig. 5, in einer ersten Ankerhub-Endlage und in einer ersten Schaltstellung der Schaltmuffe (Decoupled-Position).

Fig. 7 zeigt eine Querschnittsansicht des Schaltaktuators in einer zweiten Ankerhub-Endlage und in einer blockierten Zwischenposition der Schaltmuffe (Zahn-Zahn-Stellung).

Fig. 8 zeigt eine Querschnittsansicht des Schaltaktuators in einer zweiten Ankerhub-Endlage und in einer zweiten Schaltstellung der Schaltmuffe (Coupled-Position).

Fig. 9 zeigt eine Schnittdarstellung der Aktuatoranordnung, entlang der Schnittlinie A-D in Fig. 2, in einer ersten Schaltstellung der Schaltmuffe ("Decoupled"-Position).

Fig. 10 zeigt eine Schnittdarstellung des Aktuator-Systems in einer Zwischenposition der Schaltmuffe (Zahn-Zahn-Stellung).

Fig. 11 zeigt eine Schnittdarstellung des Aktuator-Systems in einer zweiten Schaltstellung der Schaltmuffe ("Coupled"-Position).

Fig. 12 zeigt eine Querschnittsansicht des erfindungsgemäßen Schaltaktuators in einer zweiten Ausführungsform.

Fig. 13 zeigt eine Längsansicht des erfindungsgemäßen Schaltaktuators in einer dritten Ausführungsform mit kegeliger Rückstellfeder (ohne Aktuatorgehäuse dargestellt).

Fig. 14 zeigt den qualitativen Verlauf der Hub-Kraft-Kennlinie des Schaltaktuators gemäß Ausführungen in Fig. 6-12.

Fig. 15 zeigt den qualitativen Verlauf der Hub-Kraft-Kennlinie des Schaltaktuators gemäß Ausführung in Fig. 13.

Fig. 16 zeigt eine dritte alternative Ausführungsform der Aktuatoranordnung.

Fig. 17 zeigt ein Ablaufdiagramm mit Stromprofil-Lernroutine für den "Coupling"-Vorgang.

Fig. 18 zeigt ein Ablaufdiagramm für den "Decoupling"-Vorgang.

Fig. 19 zeigt den qualitativen Verlauf eines beispielhaften mehrstufigen Stromprofils für den "Coupling"-Vorgang.

Fig. 20 zeigt den qualitativen Verlauf eines beispielhaften Stromprofils für den "Coupling"-Vorgang mit inkrementeller Erhöhung der Stromvorgabewerte entsprechend dem Ablaufdiagramm aus Fig. 19.

Fig. 21 zeigt den qualitativen Verlauf eines beispielhaften Stromprofils für den "Decoupling"-Vorgang.

Fig. 22 zeigt den qualitativen Verlauf eines weiteren beispielhaften Stromprofils für den "Decoupling"-Vorgang mit Stromrichtungsumkehr.

Fig. 23 zeigt den qualitativen Verlauf eines beispielhaften Stromprofils für den "Decoupling"-Vorgang mit pulsierendem Stromverlauf entsprechend dem Ablaufdiagramm aus Fig. 20.

Fig. 24 zeigt den qualitativen Verlauf eines weiteren beispielhaften Stromprofils für den Decoupling Vorgang mit pulsierendem Stromverlauf mit Stromrichtungsumkehr.

Fig. 25 zeigt ein Antriebssystem mit einer 12 V Aktuatoranordnung.

Fig. 26 zeigt ein Antriebssystem mit einem 48V Aktuatoranordnung.

Fig. 27 und 28 zeigen Leistungsbereiche für Aktuatoranordnung mit 12V oder 48V.

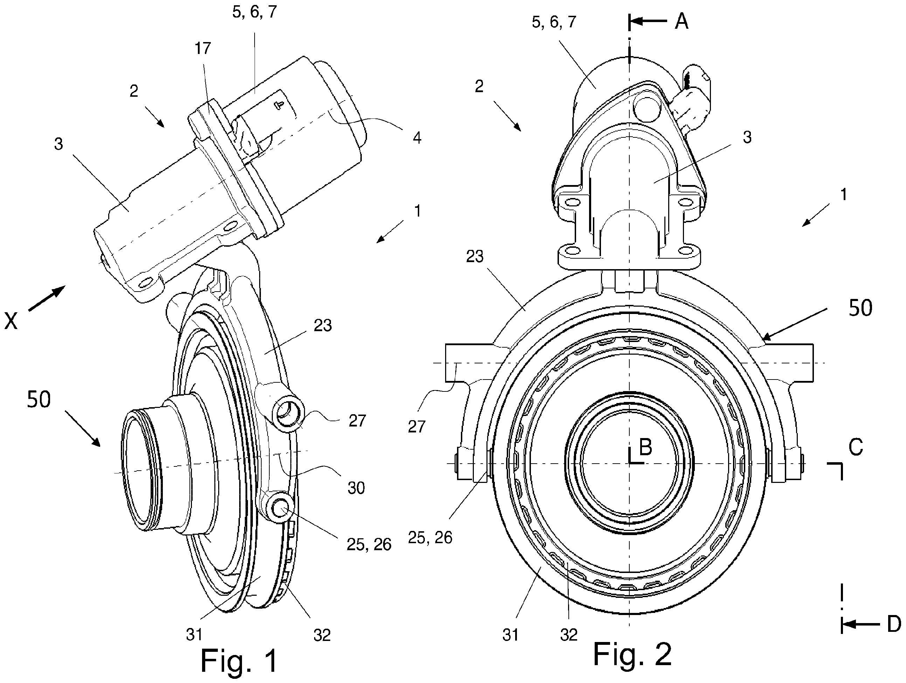

Die Fig. 1 und Fig. 2 sowie Fig. 9 bis 11 zeigen eine Aktuatoranordnung 1 mit einem elektromagnetischen Schaltaktuator 2 und einer Klauenkupplung 50.

Der elektromagnetischen Schaltaktuator 2 umfasst ein Aktuatorgehäuse 3, das über einen Flansch 17 an einen elektromagnetischen Antrieb 5 angebunden ist.

Der elektromagnetischen Schaltaktuator 2 umfasst den elektromagnetischen Antrieb 5, dessen Antriebsdrehbewegung in eine Verschwenkung einer Schwenkschaltgabel 23 umgesetzt wird. Die Schwenkschaltgabel 23 ist in etwa mittig durch einen Pin 25 gelagert. Eine Verbindung der Schwenkschaltgabel 23 mit der Schaltmuffe 31 umfasst eine Laufrolle 26, die die Relativbewegungen zwischen der Schwenkschaltgabel 23 und der Schaltmuffe 31 aufnimmt. Die Schwenkschaltgabel 23 wird um einen Schwenkachse 27 verschwenkt. Dadurch wird die Schaltmuffe 31 betätigt und in der Folge Klauen der Schaltmuffe 31 mit einer Gegenverzahnung eines Klauenrings 32 formschlüssig in Eingriff bzw. außer Eingriff gebracht.

Bei einer Aktivierung des elektromagnetischen Antriebs 5 wird die Schwenkschaltgabel 23 durch eine Bewegung entlang einer Aktuatorachse 4, auf den elektromagnetischen Antrieb 5 zu, verschwenkt, wobei die Schaltmuffe 31 eine lineare Bewegung entlang der Drehachse 30 der Schaltmuffe 31 ausführt.

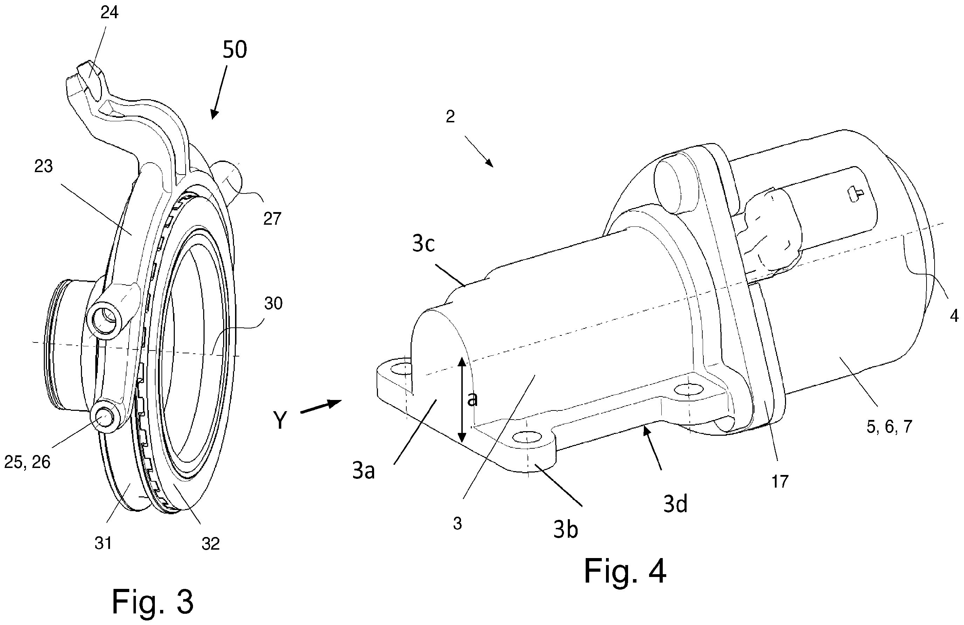

Figur 3 zeigt die Klauenkupplung 50 mit der Schwenkschaltgabel 23, die einen radialen, gekrümmten Arm aufweist, der in einem Gabelkopf 24 endet. Der Gabelkopf 24 wird an den elektromagnetischen Schaltaktuator 2 angebunden. Die Drehachse 27 der Schwenkschaltgabel 23 steht senkrecht zur Drehachse 30 der Schaltmuffe 31.

Figur 4 zeigt eine Außenansicht des elektromagnetischen Schaltaktuators 2 mit dem Aktuatorgehäuse 3 und dem elektromagnetischen Antrieb 5. In diesem Ausführungsbeispiel weist das Aktuatorgehäuse 3 eine zylindrische Grundform auf, die zum geschlossen Boden 3a hin, Abstufungen 3c aufweist, so dass sich der Zylinder verjüngt. Weiterhin weist das Aktuatorgehäuse 3 einen weiteren Flansch 3b auf, der unterhalb der Aktuatorachse 4 im Abstand a beanstandet angebracht ist.

Das Aktuatorgehäuse 3 ist einseitig abgeflacht und weist in der Fläche 3d eine Aussparung 16 auf.

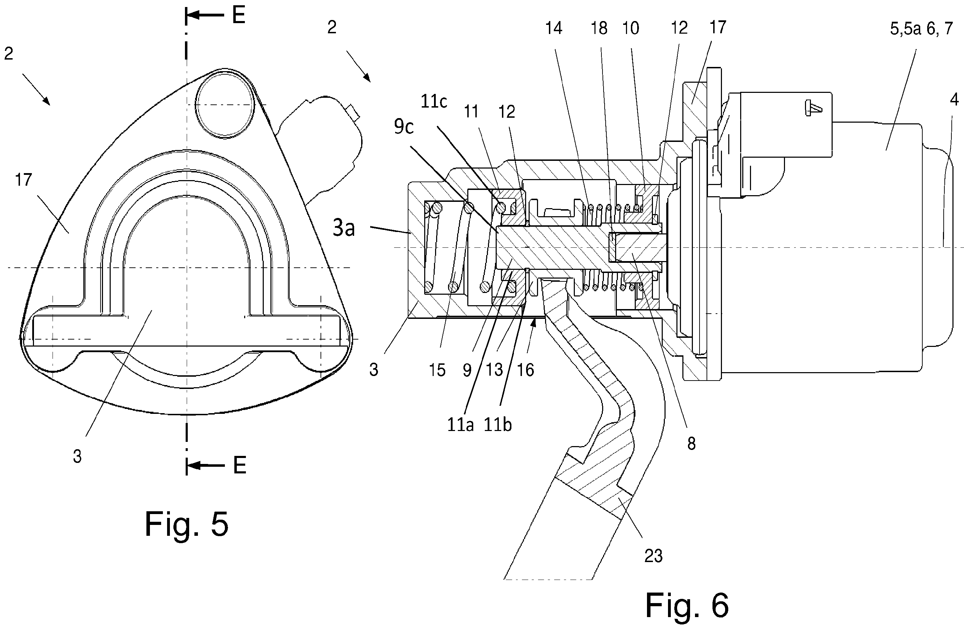

Figur 6 zeigte in einem Schnittbild den elektromagnetischen Schaltaktuator 2 mit angebundener Schwenkschaltgabel 23.

Der elektromagnetische Schaltaktuator 2 umfasst als wesentliche Komponenten einen elektromagnetischen Antrieb 5, der einen Hubmagneten 5a aufweist, welcher eine Elektromagnetspule 6, ein Spulengehäuse 7 und eine innerhalb der Spule koaxial angeordnete und axial verschiebbare Ankerstange 8 beinhaltet. Die beiden Komponenten Hubmagnet 5a und Elektromagnetspule 6 sind in den Figuren nicht dargestellt.

Die Ankerstange 8 endet in einer Sackbohrung in einer Schaltstange 9, wobei die Tiefe der Sackbohrung mit einer Einstellscheibe 18 reguliert werden kann.

Auf der Schaltstange 9 sitzt einen Schalthülse 13, in die der Gabelkopf 24 der Schwenkschaltgabel 23 eingreift. Zwischen der Schwenkhülse 13 und einem ersten Gleit-, Stützelement 10, das auf der Schaltstange 9 mit einem Sicherungsring 12 befestigt, ist einen Pufferfeder 14 eingesetzt. Die Pufferfeder 14 ist eine Spiralfeder, die die Schaltstange 9 umfasst.

Zwischen der Schalthülse 13 und dem Ende 9c der Schaltstange 9 sitzt ein zweites Gleit-, Stützelement 11 auf der Schaltstange 9 und ist ebenfalls mit einem Sicherungsring 12 befestigt. Das Gleit-, Stützelement 11 hat eine im Schnittbild doppelt L-förmige Gestalt mit einem kürzeren Arm 11a, der die Schaltstange 9 umfasst, einem längeren Arm 11 b, der entlang des Aktuatorgehäuses 3 gleitet und einer dazwischen liegenden Aussparung 11c.

In der Aussparung 11 c wird eine Rückstellfeder 15 gegen den Boden 3a des Aktuatorgehäuses 3 gehalten.

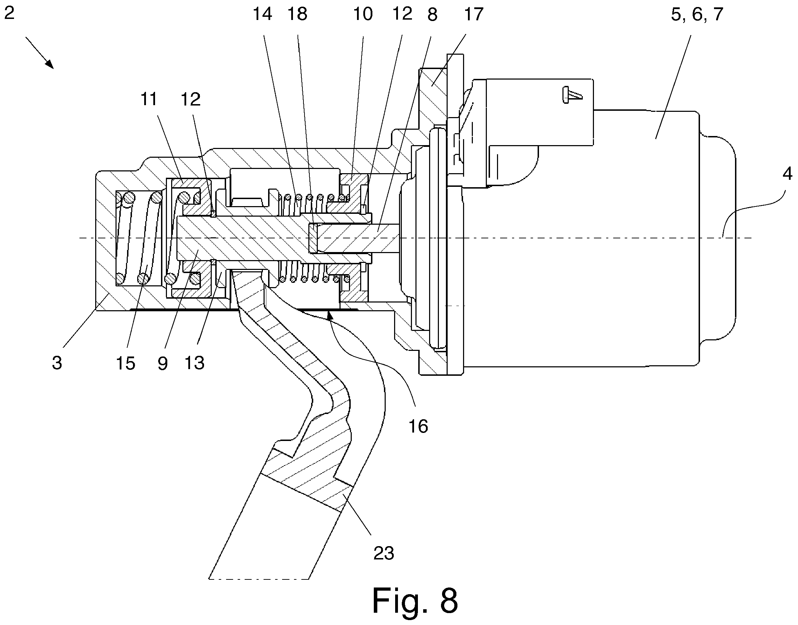

Durch Ansteuerung des Hubmagneten 5a über ein elektrisches Steuersignal, bspw. mittels Stromregelung über ein Steuergerät 29, wird die mit der Ankerstange 8 gekoppelte Schaltstange 9 von einer ersten Endlage 34, siehe Figur 6, in eine zweite Endlage 36, siehe Figur 8, bewegt und die Rückstellfeder 15 gespannt.

Die über die Pufferfeder 14 mit der Schaltstange 9 gekoppelte und relativ zur Schaltstange 9 axial verschiebbare Schalthülse 13 wird mit der Schaltstange 9 mitbewegt. Ist infolge einer möglichen Zahn-Zahn-Stellung der formschlüssigen Kupplungselemente, der Schaltmuffe 31 und des Klauenrings 32, ein unmittelbares Einspuren nicht möglich und die Schalthülse 13 dadurch in ihrer Bewegung blockiert, wird die Schaltstange 9 relativ zur Schalthülse 13 verschoben und die Pufferfeder 14 gespannt. Nach Auflösen der Zahn-Zahn-Blockade durch eine relative Verdrehung der beiden Kupplungselemente, nämlich der Schaltmuffe 31 und des Klauenrings 32, zueinander, erfolgt ein federunterstütztes Einkoppeln, da die im Federspeicher durch die Pufferfeder 14 gespeicherte Energie den Kupplungsvorgang unterstützt. Das Öffnen der Kupplung erfolgt bei unbestromtem Hubmagnet 5a federbelastet über die in der Rückstellfeder 15 gespeicherten Energie. Zur Erhöhung der Schaltdynamik ist eine Gegenbestromung der Elektromagnetspule möglich, was aber eine elektrische H- oder Vollbrücke zur Ansteuerung des elektromagnetischen Schaltaktuators 2 erfordert.

Fig. 6-8 zeigt eine Schnittansicht des erfindungsgemäßen Schaltaktuators 2 in einer ersten Ausführungsform.

Fig. 6 zeigt eine Querschnittsansicht des Schaltaktuators 2, entlang der Schnittlinie E-E der Fig. 5, in einer ersten Ankerhub-Endlage 34 und in einer ersten Schaltstellung der Schaltmuffe 13 der entkoppelten Position.

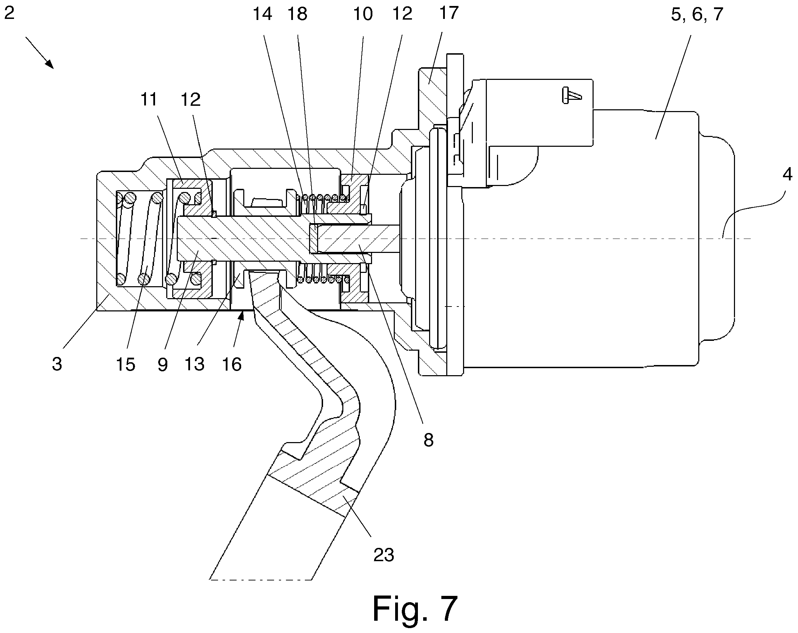

Fig. 7 zeigt eine Querschnittsansicht des Schaltaktuators 2 in einer zweiten Ankerhub-Endlage 36 und in einer blockierten Zwischenposition der Schaltmuffe 13.

Fig. 8 zeigt eine Querschnittsansicht des Schaltaktuators 2 in einer zweiten Ankerhub-Endlage 36 und in einer zweiten Schaltstellung 39 der Schaltmuffe 13 in gekoppelter Position.

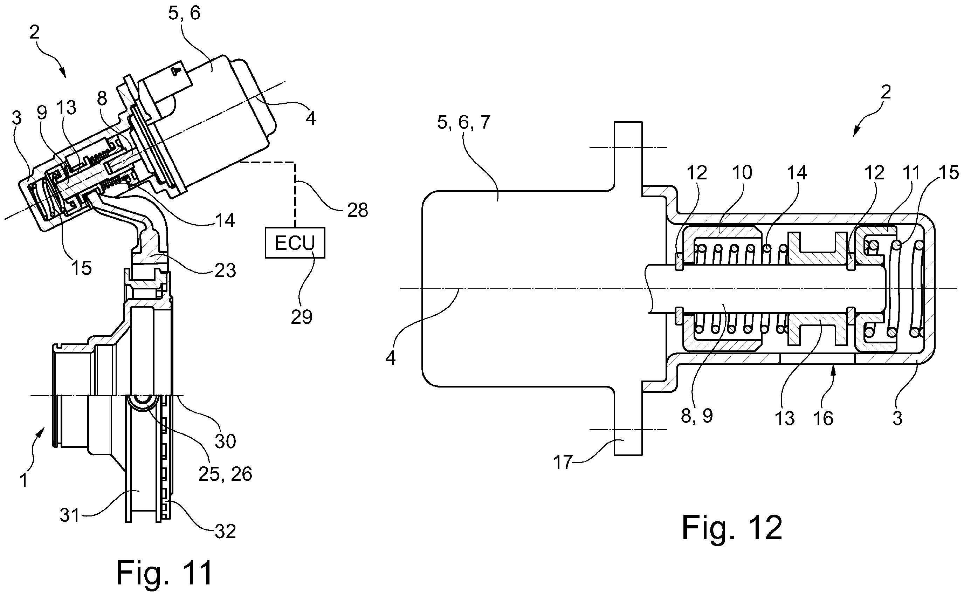

Fig. 12 zeigt eine weitere alternative Ausführungsform des erfindungsgemäßen Schaltaktuators 2.

In dieser Ausführungsform dient die Ankerstange 8 des Hubmagneten als Schaltstange 9 und ist somit als ein Gesamtteil ausgebildet. Durch die entsprechende Gestaltung des Gabelkopfes der Schwenkschaltgabel 23 lässt sich die Einleitung von Querkräften in die Schaltstange 9 vermeiden. Die Gleit-/Stützelemente 10, 11 sind vorzugsweise als Kunststoff-Spritzgussteile ausgeführt und dienen neben einer reibungsarmen Führung der Schaltstange 9 zur axialen Abstützung der Federelemente 14, 15. Dadurch ergibt sich ein äußerst kompakter und kostengünstiger Aufbau mit geringer Reibungshysterese. Darüber hinaus können die Gleit-Stützelement 10, 11 als axialer Anschlag mit vorteilhaften Dämpfungseigenschaften eingesetzt werden.

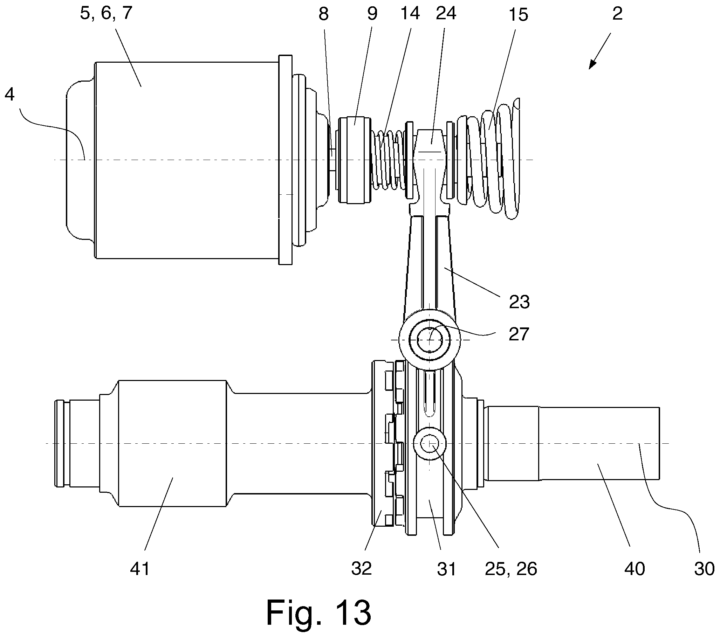

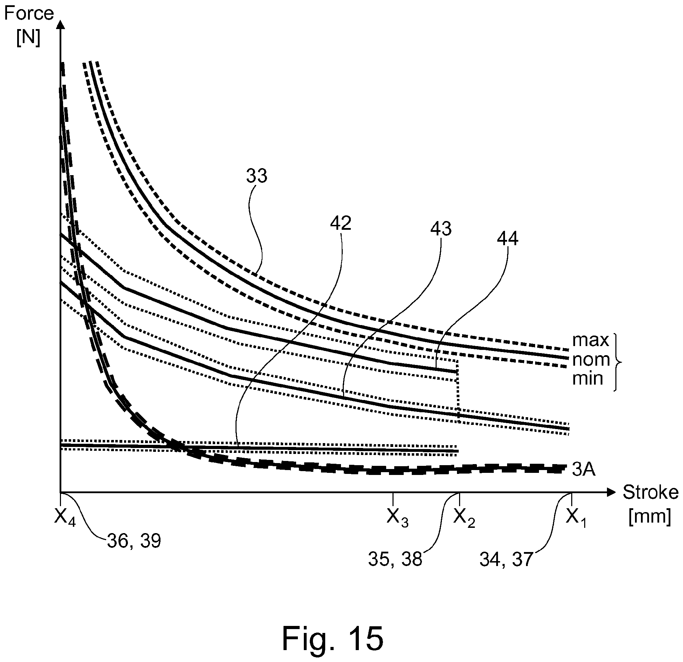

Figur 13 zeigt den kompakten Aufbau, wobei der Schaltaktuator 2 parallel zu den Wellen 40, 41 angeordnet ist. Eine der Wellen 40, 41 ist dabei mit der elektrischen Antriebsmaschine verbunden, die nicht dargestellt ist. Bei dieser Darstellung wurde auch auf das Aktuatorgehäuse 3 des Schaltaktuators 2 verzichtet. Die Rückstellfeder 15 ist in dieser Ausführungsform kegelig ausgebildet, was Vorteile für das Rückstellverhalten aufweist, siehe Figur 15.

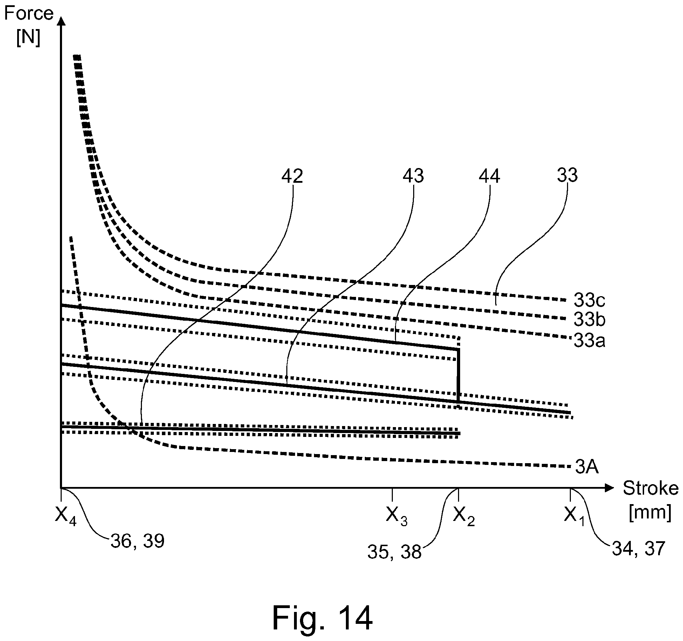

Fig. 14 zeigt den qualitativen Verlauf der Hub-Kraft-Kennlinie des Schaltaktuators 2 mit den Hub-Kraft-Kennlinien für Pufferfeder 42, Rückstellfeder 43 und Federkraft-Summenkurve 44 bei Verwendung von zylindrischen Federn. Beide Federkurven sind linear und die Summenkurve ist somit auch linear.

Ausgehend von einer Position x1, die die erste Ankerhublage 34 und eine erste Schaltmuffenposition x1 darstellt, wird der Schaltaktuator 2 auf die Position x2, eine mittlere Ankerhubposition s2 und eine mittlere Schaltmuffenposition 38 bewegt. Die Bewegung erstreckt sich bis zur zweiten Ankerhub-Endposition s3, 36 und die zweite Schaltmuffen-Endposition x4, 39. Die Hub-Kraft- Charakteristik 33 des Hubmagneten 5 ist nichtlinear mit einem Anstieg am Endanschlag an der Position x4.

Die resultierende Charakteristik des Schaltaktuators 2 ist mit den Kurven 33a, 33b, 33c dargestellt, die ein Minimum, einen mittleren Wert und ein Maximum repräsentieren.

Fig. 15 zeigt den qualitativen Verlauf der Hub-Kraft-Kennlinie des Schaltaktuators 2 in der Ausführungsform nach Figur 13 mit kegeliger Rückstellfeder 15. Die kegelige Rückstellfeder 15 besitzt einen progressiven Verlauf, was sich auch in der Summenkurve 44 widerspiegelt. Dadurch lässt sich die Hub-Kraft Summenkurve 44 gut an die progressive Hub-Kraft-Charakteristik 33 des Hubmagneten 5 anpassen und der Schaltaktuator 2 erhält einen weicheren, kontinuierlichen Anstieg in der Charakteristik. Die Federn sind ganz allgemein mit konstanter oder veränderlicher Federrate auf die Federlänge ausgestaltet. Ganz allgemein können die Federn weiter oder enger werden, die Federdrahtstärke kann variieren.

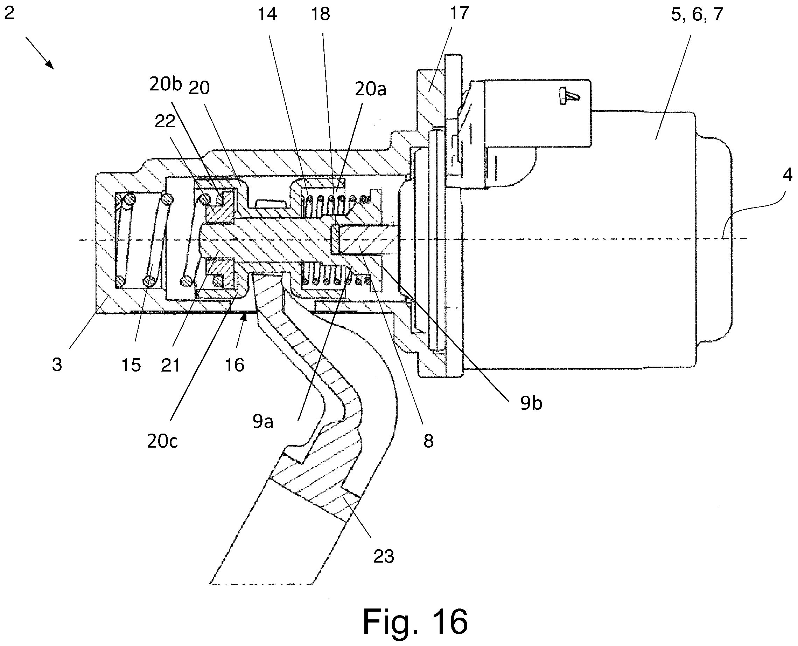

Figur 16 zeigt eine weitere Ausführungsform des Schaltaktuators 2.

Die bisher beschriebenen Ausführungen bestehen aus zwei Gleit-/Stützelemente 10, 11, einer Schalthülse 13 zur Aufnahme der Schaltgabel 23 als auch zwei Sicherungsringen 12, um die Kräfte von der Schaltstange 9 übertragen zu können. Die Gleitelemente 10, 11 sind in unterschiedlichen Bohrungen im Aktuatorehäuse 3 angebracht, was die Gehäusekomplexität erhöht.

Die zwei Gleit-/Stützelemente 10, 11 und die Schalthülse 13 zur Aufnahme der Schaltgabel 23 werden zu einem Führungselement 20 kombiniert.

Das Führungselement 20 umfasst die Schaltstange 9 zylindrisch anliegend im Bereich, in dem die Schwenkschaltgabel 23 angreift. Das Führungselement 20 weitet sich radial und erzeugt einen ersten Aufnahmebereich 20a für die Pufferfeder 14. Das Führungselement 20 weist einen zweiten Aufnahmebereich 20b auf, in dem sich die Rückstellfeder 15 abstützt.

Durch eine entsprechende Abstufung in der Schaltstange 9 im Aufnahmebereich 20b zur Aufnahme der Rückstellfeder 15 kann einen Aufnahmen 22 den Sicherungsring 12 ersetzten. Im Bereich des Aufnahmeraums 20a weist die Schaltstange 9 hinten für die Pufferfeder 14 eine gestufte Verdickung auf, die sich über weitere Stufen 9a bis zu der Stirnfläche der Schaltstange 9b erstrecken. Damit kann auch hier der Sicherungsring 12 entfallen.

Zusätzlich ist auch die Schnittstelle zur Schaltgabel 23 in diesem Führungselement ausgebildet. Das Aktuatorgehäuse 3 weist einen einheitlichen Bohrungsdurchmesser auf, was den Bearbeitungsaufwand minimiert.

Das Führungselement 20 weist speziell ausgebildete Gleitflächen 20c zur Gehäusebohrung auf, um den Verschiebewiderstand zu minimieren. Alternativ können diese Gleitflächen auch bombiert ausgeführt sein.

Um die Anforderungen an einen bauraum- und kostenoptimierten Aktuator erfüllen zu können, müssen die Sicherheiten in der Auslegung und Dimensionierung von Elektromagnet und Mechanik im Allgemeinen möglichst knapp bemessen werden. Darüber hinaus muss die elektrische Halteleistung in den Schaltendpositionen minimiert werden. Dies führt wiederum dazu, dass die Robustheit des Systems, d.h. die Stabilität gegenüber inneren und äußeren Einflussfaktoren, z.B. geometrische Toleranzen, Federtoleranzen, Änderung der Systemreibung, zufolge Temperatureinfluss oder Verschleiß, äußere Schwingbeschleunigungen etc. leidet.

Die Leistungsstufe zur Ansteuerung des elektromagnetischen Schaltaktuators 2 wird vorzugsweise in die Steuerplatine des Umrichters zur Ansteuerung des elektrischen Antriebsmotors, dem sog. Inverter Control Board, integriert. Dadurch bilden der elektrische Antriebsmotor, Umrichter mit integrierter Leistungsstufe zur Ansteuerung des Schaltaktuators 2 und die mechanischen Komponenten des Schaltaktuators 2 eine Einheit. Der elektrische Leitungsstrang kann entsprechend kurz ausgeführt werden, wodurch neben dem Entfall von Signalverzugszeiten, unter Berücksichtigung thermischer Grenzen, kurzzeitig hohe Anzugsströme an der Elektromagnetspule 6 realisierbar sind. Hubmagnet 5, Anker, Schaltstange 9, Schalthülse 13 und Federpaket sind in ein gemeinsames Aktuatorgehäuse 3 integriert. Dadurch kann die Anzahl an mechanischen Schnittstellen reduziert und die Toleranzkette klein gehalten werden. Im Servicefall ist ein Tausch des gesamten Schaltaktuators 2 einfach möglich.

Der erfindungsgemäße Schaltaktuator 2 lässt sich für die Betätigung von Schaltelementen auf Achs-, Halbwellen- sowie auf Zwischenwellenniveau zwischen dem elektrischen Antriebsmotor und der Abtriebswelle einsetzen.

Die Leistungsdichte von elektromechanischen Aktuatoren im 12V Bordnetz ist durch den elektrischen Widerstand von Spule und Kabelstrang mit Steckverbindungen beschränkt. Dieser Widerstand steigt zudem bei hohen Temperaturen und begrenzt somit die maximale Stromaufnahme einer Elektromagnetspule bei gegebener Spannung

$$(I = \frac{U}{R})$$ .

Durch eine Erhöhung der Spannung auf 48V, sowie einer Erhöhung der Windungsanzahl der Spule bei kleinerem Drahtquerschnitt kann bei gleichen Strömen kurzzeitig eine höhere Leistungsdichte erzielt werden.

Da während des Schaltens eine höhere Verlustleistung auftritt, darf der hohe Schaltstrom nicht lange gehalten werden. Dies kann mit der mechanischen Anordnung von Schaltstange und Federspeicher, wie in den Ausführungsbeispielen beschreiben, kompensiert werden.

Durch Nutzung des bereits vorhandenen 48V Spannungsniveaus von Mild-Hybrid Systemen kann bei einem bauraum- und kostenneutralen Design die Leistungsdichte von Aktuatoren erheblich gesteigert werden.

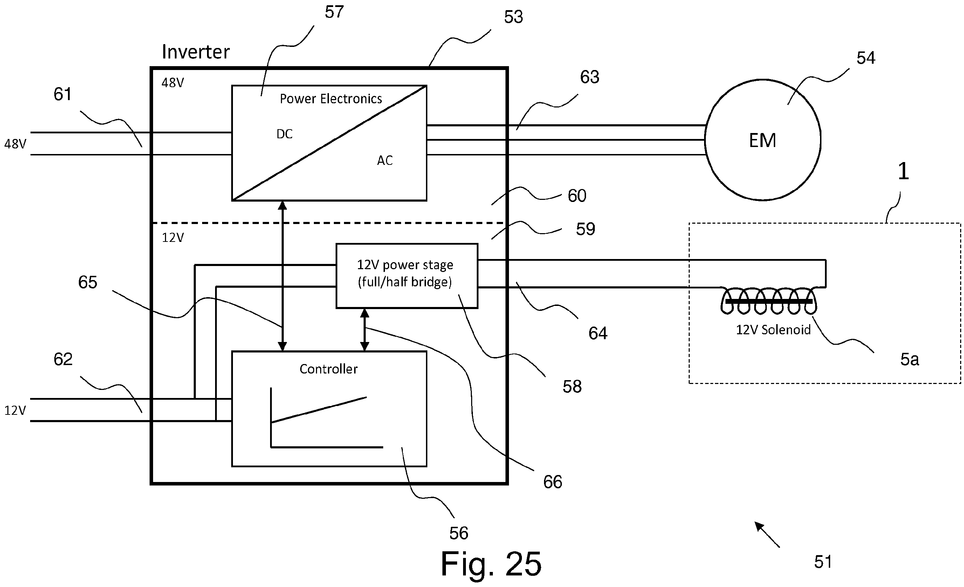

In Figur 25 ist ein Ausführungsbeispiel für ein 48V Antriebssystem mit 12V Aktuator 51 mit einem Inverter 53 für den elektrischen Antriebsmotor 54 dargestellt. Zwei Eingange, der 48V Versorgungsspannungseingang 61, sowie der 12V Versorgungsspannungseingang münden in einem Inverter 53.

Der 48V Versorgungsspannungseingang 61 ist dabei mit einer Leistungsendstufe für 48V Elektromotor 57 verbunden, die über eine Mehrphasenausgangsleitung mit dem elektrischen Antriebsmotor 54 in Verbindung steht.

Der 12V-Versorgungseingang 62 mündet an einer Steuerelektronik 56 die steuerungstechnisch mit Kommunikation 65 zwischen Steuerelektronik und Leistungsendstufe und der Kommunikation 66 zwischen Steuerelektronik und einer Leistungsendstufe 58 für 12V für den Hubmagnet verbunden ist.

In der Ausführungsform der Figur 25 werden die Integration der Leistungsendstufe 58 für 12V in den Inverter Bauteile eingespart und Laufwege verringert.

Darüber hinaus kann ein zusätzliches Steuergerät entfallen, wodurch die Signallauf- und Verzugszeiten kurz gehalten werden.

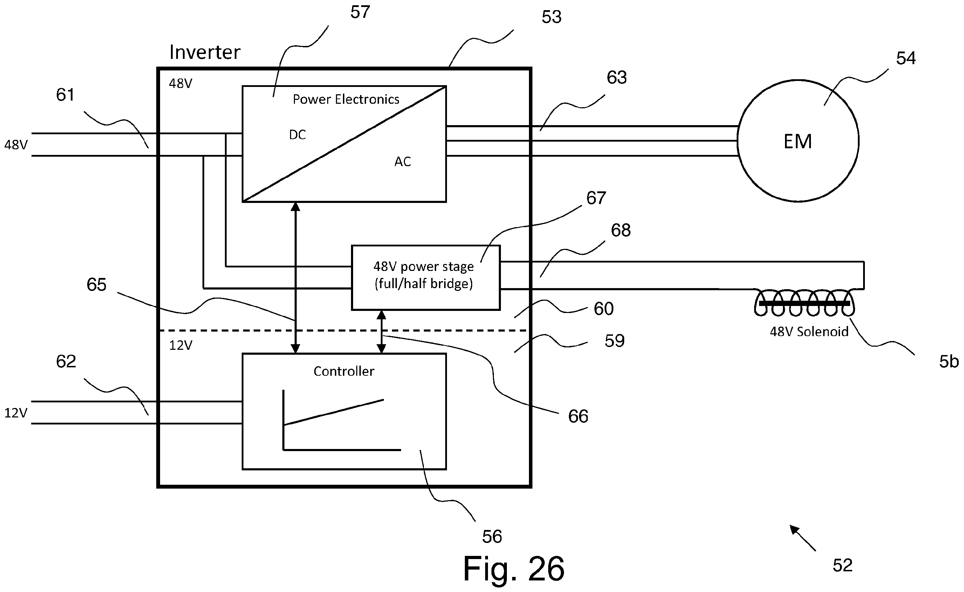

In der Ausführungsform nach Figur 26 wird durch die Integration des Leistungsausganges 67 zur Ansteuerung des Hubmagneten 5b in den Inverter 53 zusätzliche Kosten für eine 48V Spannungsversorgung vermieden bzw. klein gehalten werden.

Zudem kann der 48V Leistungsausgang für Elektromagnet 68 zwischen Spannungsversorgung und Elektromagnetspule entsprechend kurz ausgeführt werden. Vorzugsweise ist ein Kabelabgang bereits im Aktuatorgehäuse 3 der Schaltaktuators integriert, so dass ein zusätzlicher Steckkontakt entfallen kann.

Der 48V Leistungsausgang für die Spannungsversorgung des Schaltaktuators wird in den Inverter 53 im Hochvoltbereich integriert.

Die 48V Magnetspule des Hubmagneten 5b ermöglicht bei bauraum- und kostenneutralem Design unter der Voraussetzung der Verwendung gleicher Kupfermenge, jedoch größere Wicklungsanzahl bei kleinerem Drahtquerschnitt, bei einem beispielhaft gewählten Referenzdesign eine um bis zu 86 % höhere Anzugskraft. Im Gegenzug reduziert sich, in Folge des größeren Spulenwiderstandes, bei gleicher elektrischer Halteleistung die Haltekraft um ca. 44%.

Durch Einsatz eines Permanentmagneten (gehäusefest oder am Anker) kann dem wiederum entgegengewirkt und die Leistungsdichte des Aktuators weiter erhöht werden. In Kombination mit dem mechanischen Aufbau mit integriertem Federspeicher ergibt sich der Vorteil, dass der hohe Schaltstrom nur kurzzeitig anliegt (z.B. <100ms, reale Schaltzeiten liegen im Bereich von 20...60ms) wodurch auch thermisch keine Probleme zu erwarten sind. Im durchgeschalteten Zustand kann eine Absenkung auf minimalen Haltestrom erfolgen mit dem Ziele eine Halteleistung von ≤6W zu erreichen.

Tabelle 1 zeigt eine beispielhafte 48V-Spulenauslegung im Vergleich zu einem 12V Referenz-Design.

| | 12V Design | 48V Design |
|---|---|---|
| Anzahl Windungen [-] | 180 | 324 |
| Drahtquerschnitt [mm$^2$] | 0.80 | 0.56 |
| Kupfermasse [g] | 83.0 | 72.6 |
| Spulenwiderstand [$\Omega$] | 0.65 | 2.40 |
| Induktivität [mH] | 0.85 | 4.85 |
| Anzugskraft bei 10A (4mm Luftspalt) | 86 (≙ 100%) | 160 (≙ 186%) |
| Haltekraft bei 6W Halteleistung (0mm Luftspalt) | 277 (≙ 100%) | 156 (≙56%) |

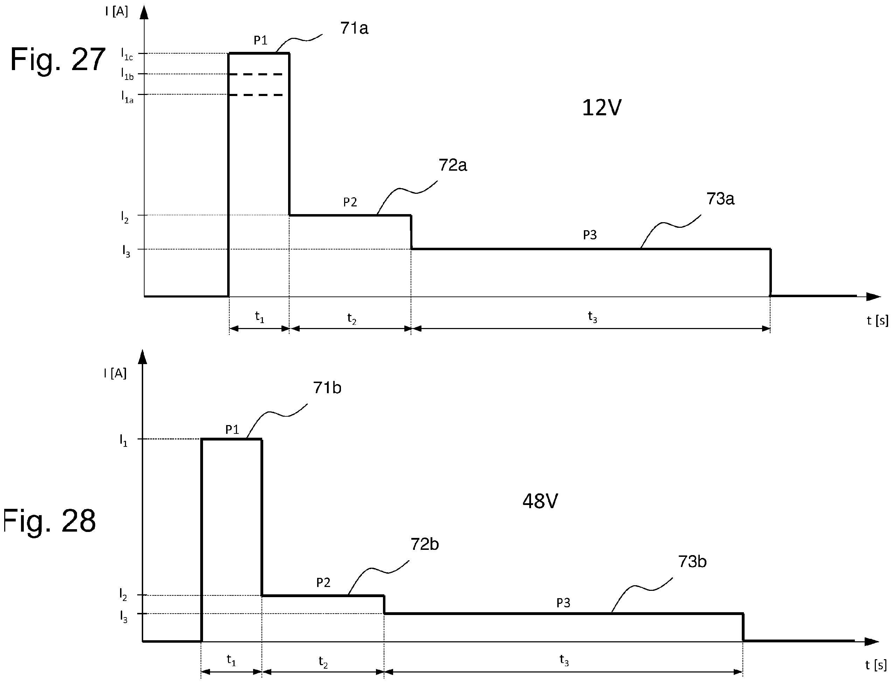

Figur 27 zeigt Leistungsbereiche über der Zeit für einen 12V-Betrieb des Schaltaktuators, Figur 28 für einen 48V-Betrieb.

71a, b stellt dabei den Leistungsbereich 1 beim Start des Kopplungsvorgangs dar. 72a, b bezeichnet den Leistungsbereich 2 der ersten Haltestufe, wenn Schaltmuffe und Klauen ring in einer Zahn-Zahn-Stellung sind.

73a, b ist der Leistungsbereich 3 der zweiten Haltestufe, die den eingekoppelten Zustand darstellt.

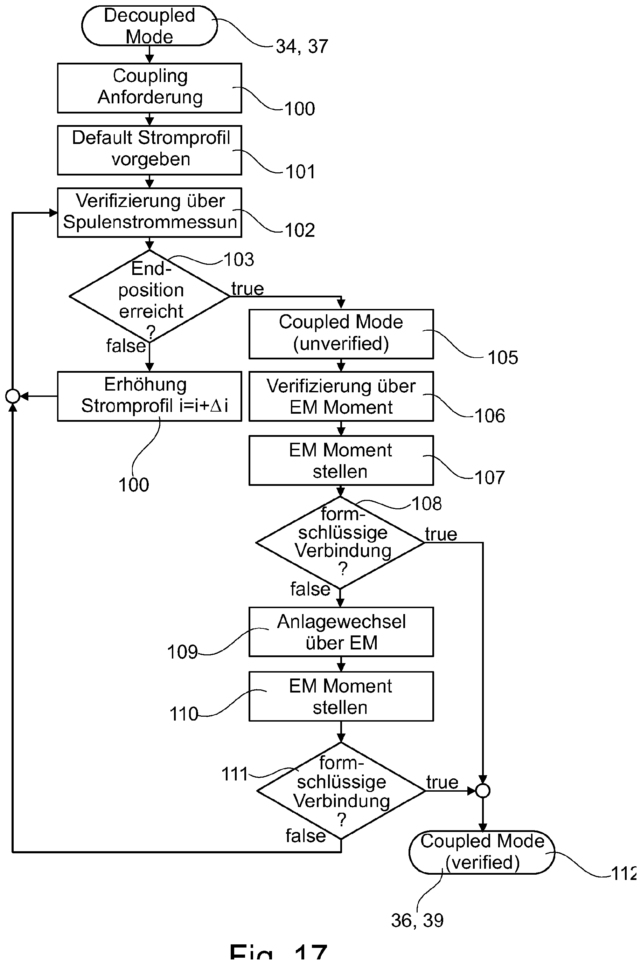

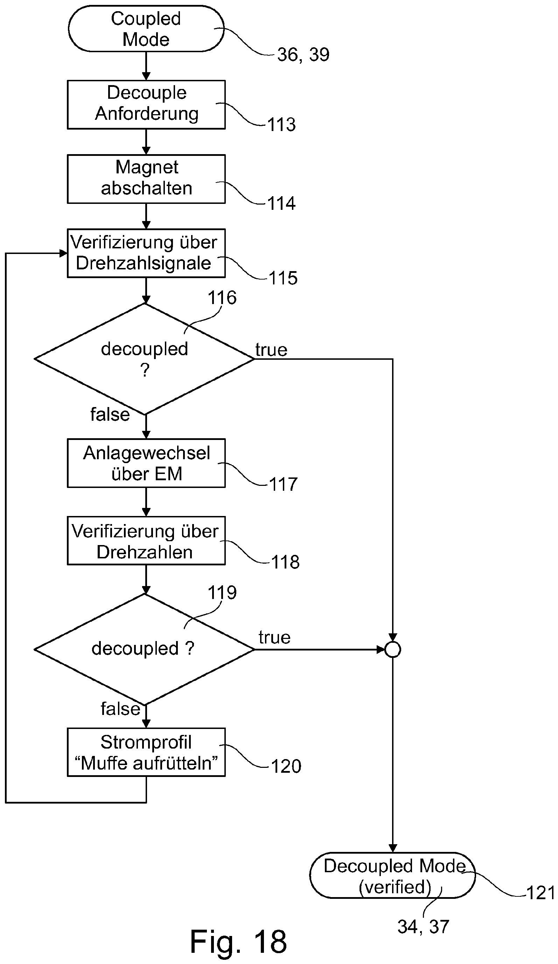

In den Figuren 17 und 18 wird ein Verfahren zu Steuerung der Schaltaktuatoren dargestellt. Dieser Steuerung kommt ein hoher Stellenwert zu.

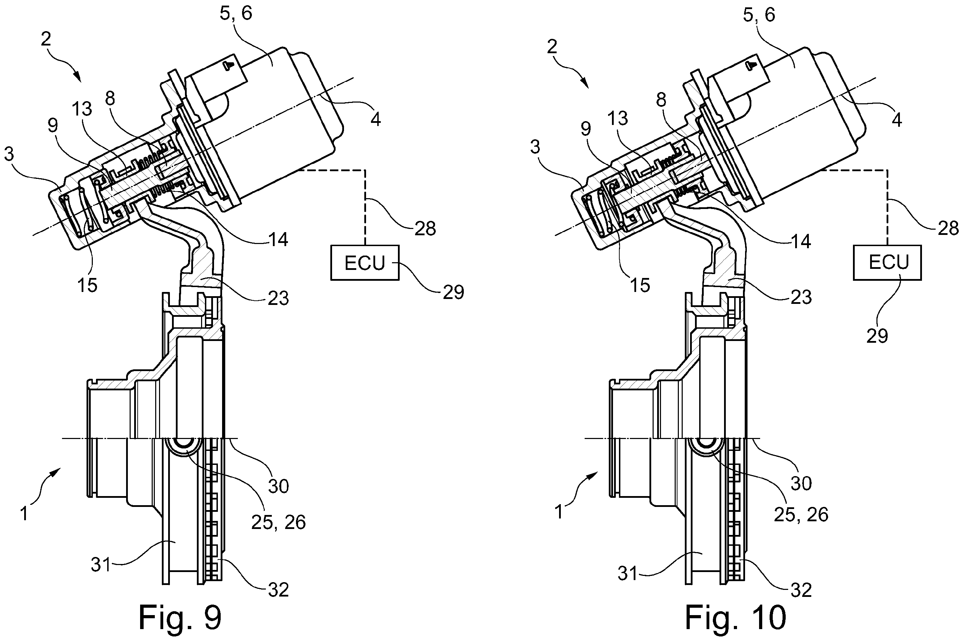

Die erfindungsgemäße Steuersoftware steuert eine beispielhafte Aktuatoranordnung 1, wie in den Figuren 9,10 und 11 gezeigt

Der elektromechanische Schaltaktuator 2 umfasst einen elektromagnetischen Linearantrieb bestehend aus dem Hubmagnet 5, welcher die Elektromagnetspule 6 und eine innerhalb der Spule koaxial angeordnete und axial verschiebbare Ankerstange 8 beinhaltet. Durch Ansteuerung des Hubmagneten 5 über eine elektrische Steuerleitung 28, bspw. mittels Stromregelung über ein Steuergerät 29, wird die mit der Ankerstange 8 gekoppelte Schaltstange 9 von einer ersten Endlage 34 in eine zweite Endlage 36 bewegt und die Rückstellfeder 15 gespannt.

Die Ansteuerung der Schaltaktuatorik erfolgt über eine Steuersoftware im Steuergerät 29, das in einer weiteren Steuerung 56 des Fahrzeugs eingebettet ist. Eine Verbindung mit der Ansteuerung 56 des elektrischen Antriebsmotors 54 oder eine Integration in diese muss vorhanden sein. Die Steuersoftware läuft bevorzugt auf der Steuereinheit 56 im Inverter der elektrischen Antriebsmaschine.

Die Steuerung 29 erlaubt es eine Rückmeldung über Schaltzustand des Schaltaktuators zu gewinnen.

Durch Messung des an der Elektromagnetspule 6 fließenden Spulenstroms in hinreichender Messgenauigkeit im Steuergerät oder auch extern kann detektiert werden, ob die Ankerstange 8 ihre zweite Ankerhub-Endlage 36 erreicht hat, was bedeutet, dass die Klaue eingelegt oder der Federspeicher 14 vorgespannt ist. Dies ist gerade bei einer Auslegung des Schaltaktuators von Bedeutung, in der die Magnetkraft nur geringfügig höher als die Federkraft des Federspeichers 14 ist.

So kann festgestellt werden, wenn zufolge erhöhter Verschiebewiderstände wie sie bei Tieftemperatur auftreten, das Federpaket 14, 15 von der elektromagnetischen Kraft des Hubmagneten nicht überdrückt werden kann.

In Figur 17 ist ein solcher Ablauf dargestellt. Nach der Anforderung 100 an den Schaltaktuator 2, die Klaue einzukuppeln, wird von der Steuerung ein Stromprofil vorgegeben 101. Über die bereits oben beschriebene Messung des Spulenstroms 102 wird festgestellt, ob die Endposition erreicht ist, 103.

Ist die Überprüfung negativ, wird der Strom um einen bestimmten Betrag ΔI erhöht 104.

Fällt die Überprüfung positiv aus, ist der Schaltvorgang für die Klaue abgeschlossen 105 und wird dann verifiziert,106.

Die Plausibilitätsprüfung erfolgt durch Stellen eines kleinen Drehmomentes 107 am elektrischen Antriebsmotor und einem Vergleich der Drehzahlsignale der beiden zu verbindenden Wellen 40, 41.

Ist die formschlüssige Verbindung durch Abgleich der Drehzahlen verifiziert 108, ist die Klaue eingelegt und das Verfahren kann beendet werden 112.

Ergibt der Vergleich der Drehzahlsignale ein negatives Ergebnis wird ein Anlagenwechsel der Zähne von Schaltmuffe 31 und Klauenring 32 über den elektrischen Antriebsmotor 54 hergestellt 109 und ein Drehmoment über den elektrischen Antriebsmotor 54 eingestellt.

Über den zusätzlichen, über die Ansteuerung des elektrischen Antriebsmotors 54 eingeleiteten, Anlagewechsel der Zahnflanken von Klauenring 32 und Schaltmuffe 31 kann eine, unter ungünstigen Bedingungen mögliche Teilüberdeckung der Klauen weitgehend vermieden werden, was wiederum zur Erhöhung der funktionalen Sicherheit des Systems beiträgt, ohne dass elektromagnetische und mechanische Komponenten wie Spule, Federn, Klauen unnötig überdimensional ausgelegt werden müssen.

Anschließend erfolgt wieder eine Überprüfung, ob die Klaue formschlüssig verbunden ist, 111. An diesem Punkt springt das Verfahren entweder wieder an den Anfang oder bestätigt die sichere Verbindung 112. Das Verfahren dient als Stromprofil-Lernroutine für den Kupplungs-Vorgang.

Figur 18 beschreibt den Ablauf bei einer Anforderung zum Trennen der Klauenkupplung 50. Nach Erhalt der Anforderung 113 wird der Magnet abgeschaltet 114 und die Drehzahlsignal des elektrischen Antriebsmotors 54 verifiziert, 115.

Wenn der Vergleich mit dem Sollwert 116 stimmt, endet das Verfahren und der ausgekuppelte Zustand ist bestätigt 121.

Wenn der Vergleich in 116 negativ ausfällt, wird wieder ein Anlagewechsel der Verzahnung durch den elektrischen Antriebsmotor 54 hergestellt 117 und anschießend die Drehzahl wieder verifiziert 118.

Es erfolgt ein weiterer Vergleich zwischen Soll- und Ist-Daten 119. Wenn der Vergleich immer noch negativ ist, wird ein Stromprofil aktiviert, das die Schaltmuffe 31 aufrüttelt, 120. Das Verfahren wird dann mit dem Schritt 115 Verifizierung der Drehzahlsignale weitergeführt.

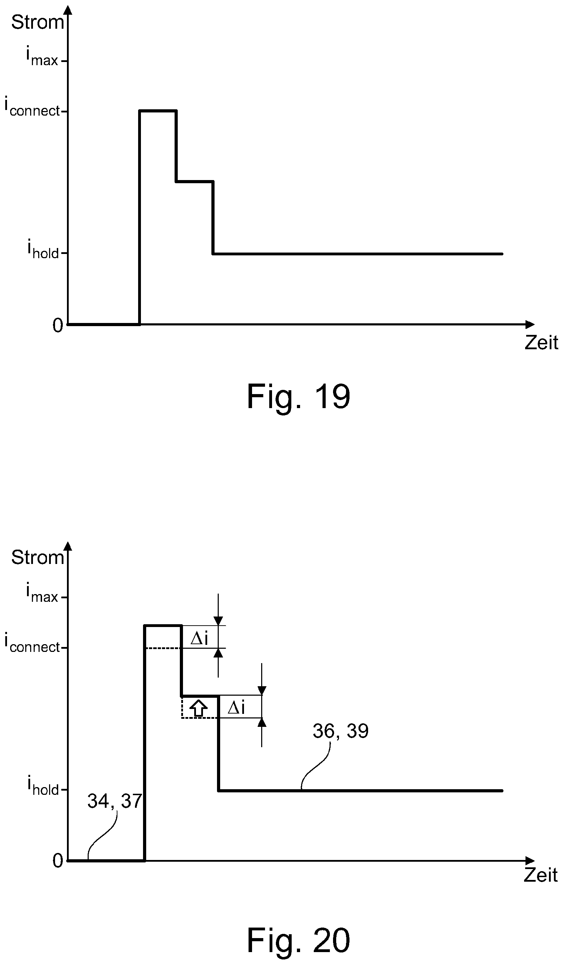

Fig. 19 zeigt den qualitativen Verlauf eines beispielhaften mehrstufigen Stromprofils für den "Coupling"-Vorgang.

Fig. 20 zeigt den qualitativen Verlauf eines beispielhaften Stromprofils für den "Coupling"-Vorgang mit inkrementeller Erhöhung der Stromvorgabewerte entsprechend dem Ablaufdiagramm aus Fig. 17.

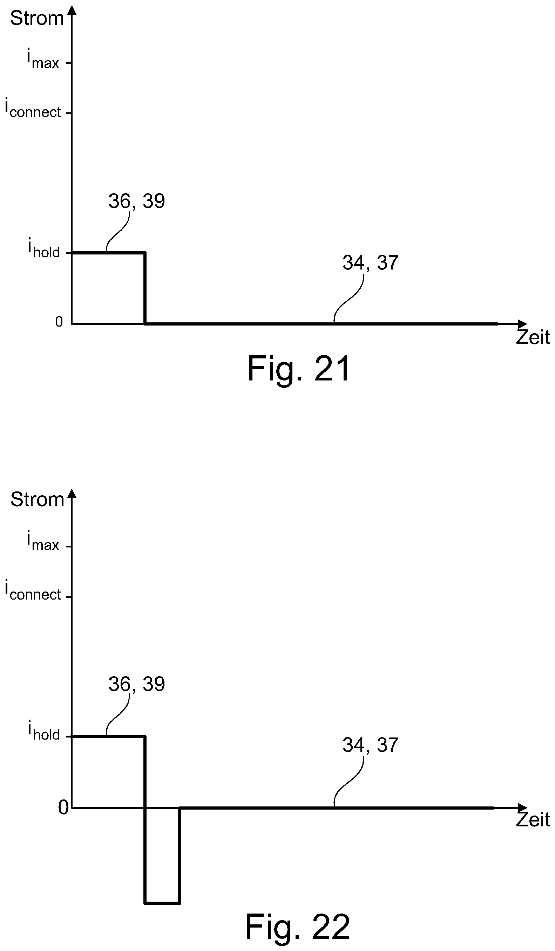

Fig. 21 zeigt den qualitativen Verlauf eines beispielhaften Stromprofils für den "Decoupling"-Vorgang.

Fig. 22 zeigt den qualitativen Verlauf eines weiteren beispielhaften Stromprofils für den "Decoupling"-Vorgang mit Stromrichtungsumkehr.

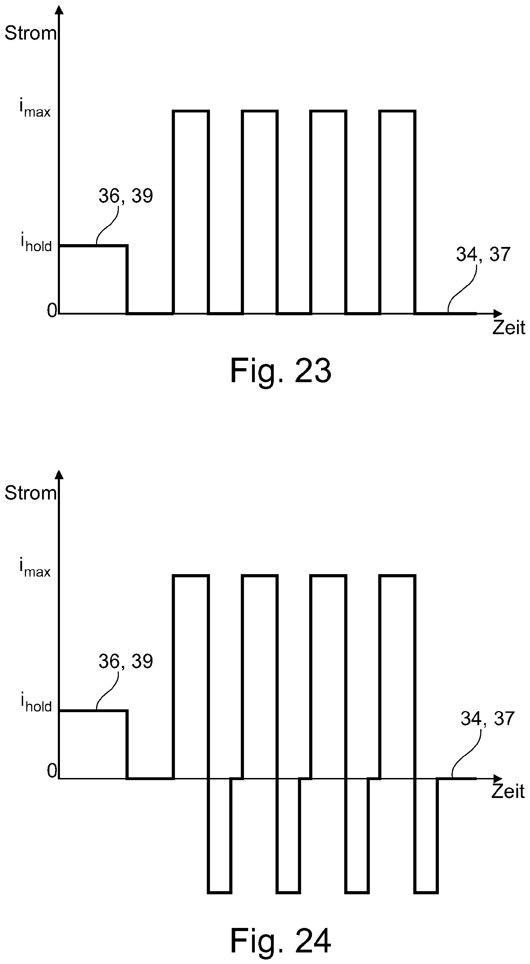

Fig. 23 zeigt den qualitativen Verlauf eines beispielhaften Stromprofils für den "Decoupling"-Vorgang mit pulsierendem Stromverlauf entsprechend dem Ablaufdiagramm aus Fig. 18.

Fig. 24 zeigt den qualitativen Verlauf eines weiteren beispielhaften Stromprofils für den "Decoupling"-Vorgang mit pulsierendem Stromverlauf mit Stromrichtungsumkehr.

Der von der erfindungsgemäßen Steuerung und den erfindungsgemäßen Verfahren betrieben Schaltaktuator 2 trägt zur Reduzierung der Bordnetzbelastung bei.

Durch das Absenken der Halteleistung, was bei einer Auslegung als "normally o-pen"-System der Fall ist, kann die Belastung reduziert werden.

Einem ungewollten Öffnen der Klauen kann mit sofortiger Erhöhung des Spulenstromes entgegengewirkt werden. Dadurch kann der Haltestrom auf ein Minimum reduziert werden, was entsprechend hohe Messfrequenz der Spulenstrommessung vorausgesetzt. Beim Öffnen der Kupplung kann, eine entsprechende Betriebsstrategie vorausgesetzt, das Drehmoment des elektromagnetischen Antriebs 5 auf null geregelt sein oder beispielsweise in Form einer sinusförmigen Schwingung um die Nulllage herum geregelt werden. Dadurch lässt sich ein lastloses restmomentfreies Öffnen der formschlüssigen Kupplung realisieren, wodurch die Betätigungskräfte, selbst bei Klauen mit geringem Hinterschneidungswinkel, klein gehalten werden können. Die Periodendauer der Drehmomentregelung um die Nulllage wird in Abhängigkeit von der Zeitkonstante des Aktuators festgelegt.

Das Bordnetz kann auch durch Anlernen bzw. Optimierung des Stromprofiles entlastet werden. Ein höherer Schaltkraftbedarf in Folge erhöhter Verschiebewiderstände, zum Beispiel durch Temperatureinfluss oder durch Verschleiß über Lebensdauer, kann detektiert werden. Eine adaptive Gestaltung des Stromprofils ist durch das Verfahren gegeben; wobei Verschiebewiderstände indirekt gemessen und für die Festlegung des Stromprofils berücksichtigt werden.

Die Kraftreserve der elektromagnetischen Kraft gegenüber der erforderlichen Aktuierungskraft durch Federkräfte und Reibungswiderstände kann auf ein Minimum begrenzt und das Stromprofil so klein wie möglich gehalten werden.

Dies ist wiederum vorteilhaft für das NVH ("Noise Vibration Harshness")-Verhalten, die thermische Belastung sowie die mechanische Bauteilbelastung der Aktuatoranordnung. Die elektromagnetischen Aktivteile wie Spule, Anker, Polrohr, sowie die mechanischen Komponenten Schaltstange, Federspeicher, Schalthülse, Rückstellfeder, Schaltgabel der Aktuatorik-Kette müssen nicht unnötig überdimensioniert werden, was neben einer geringen Bordnetzbelastung zufolge einer reduzierten Leistungsaufnahme der elektromagnetischen Spule auch Vorteile in Bezug auf Package, Gewicht und Kosten mit sich bringt.

Das Verfahren kann auch als Diagnosefunktion eingesetzt werden.

Es kann auch ein anliegendes Restmoment indirekt sensiert werden: Bei geschlossener Kupplung ("normally open"-System) wird der Haltstrom so weit gesenkt, bis eine Bewegung der Muffe detektiert wird. Somit kann über die Zusammenhänge Strom-Kraft-Drehmoment das anliegende Moment indirekt ermittelt werden. Dabei müssen die Einflüsse der Reibungshysterese berücksichtigt werden. Ein solches Verfahren ist nur bei einer Klauengeometrie mit Hinterschnitt möglich.

Das Verfahren kann auch angewendet werden, bei entsprechender Genauigkeit der Ankerhubbestimmung, um die erforderliche Mindestüberdeckung an den Klauen zu detektieren.

Hierzu darf allerdings der Schaltaktuator 2 keinen Federspeicher aufweisen.

**Bezugszeichenliste**

| | |
|---|---|
| 1 | Aktuatoranordnung |
| 2 | Elektromagnetischer Schaltaktuator |
| 3 | Aktuatorgehäuse |
| 3a | Boden |
| 3b | Flansch |
| 3c | Stufen |
| 3d | Fläche |
| 4 | Aktuatorachse |
| 5 | elektromagnetischer Antrieb |
| 5a, b | Hubmagnet |
| 6 | Elektromagnetspule |

| 7 | Spulengehäuse |
|---|---|
| 8 | Ankerstange |
| 9 | Schaltstange |
| 9a | Stufen |
| 9b | Stirnfläche |
| 9c | Ende |
| 10 | erstes Gleit-/ Stützelement |
| 11 | zweites Gleit-/ Stützelement |
| 11a | kurzer Arm |
| 11b | langer Arm |
| 11c | Aussparung |
| 12 | Sicherungsring |
| 13 | Schalthülse |
| 14 | Pufferfeder, Federspeicher |
| 15 | Rückstellfeder |
| 16 | Aussparung |
| 17 | Befestigungsflansch |
| 18 | Einstellscheibe |
| 20 | Führungselement |
| 20a, b | Aufnahmenraum |
| 20c | Gleitfläche |
| 22 | Aufnahme |
| 23 | Schwenkschaltgabel |
| 24 | Gabelkopf |
| 25 | Pin |
| 26 | Laufrolle |
| 27 | Drehachse Schwenkschaltgabel |
| 28 | elektrische Steuerleitung |
| 29 | Steuergerät |
| 30 | Drehachse Schaltmuffe |
| 31 | Schaltmuffe |
| 32 | Klauenring |
| 33 | Hub-Kraft Charakteristik |
| 34 | erste Ankerhub-Endlage s1 |
| 35 | mittlere Ankerhubposition s2 |
| 36 | zweite Ankerhub-Endlage s3 |
| 37 | Erste Schaltmuffen Endposition x1 |
| 38 | Mittlere Schaltmuffenposition x2 |
| 39 | Zweite Schaltmuffen Endposition x3 |
| 40 | erste Welle |
| 41 | zweite Welle |
| 42 | Hub-Kraft-Kennlinie Pufferfeder |
| 43 | Hub-Kraft-Kennlinie Rückstellfeder |
| 44 | Hub-Kraft-Kennlinie Summenkurve |
| 50 | Klauenkupplung |
| 51 | 48V Antriebssystem mit 12V Aktuator |
| 52 | 48V Antriebssystem mit 48V Aktuator |
| 53 | Inverter / Umrichter |
| 54 | 48V Elektromotor |
| 5a | 12V Elektromagnet / Aktuator |
| 5b | 48V Elektromagnet / Aktuator |
| 56 | Steuerelektronik / Inverter Control Board |
| 57 | Leistungsendstufe für 48V Elektromotor |
| 58 | Leistungsendstufe für 12V Elektromagnet |
| 59 | 12V Bereich im Inverter |
| 60 | 48V Bereich im Inverter |
| 61 | 48V Versorgungsspannungseingang |
| 62 | 12V Versorgungsspannungseingang |

| 63 | Mehrphasenleistungsausgang für EM |
|----|------------------------------------|
| 64 | 12V Leistungsausgang für Elektromagnet |
| 65 | Kommunikation zw. Steuer- u. Leistungsendstufe EM |
| 66 | Kommunikation zw. Steuer- u. Aktuatorikendstufe |
| 67 | Leistungsendstufe für 48V Elektromagnet |
| 68 | 48V Leistungsausgang für Elektromagnet |
| 71a, b | Leistungsbereich 1 (Start "Coupling"-Vorgang) |
| 72a, b | Leistungsbereich 2 (erste Haltestufe: Zahn-Zahn-Stellung) |
| 73a, b | Leistungsbereich 3 (zweite Haltestufe: "coupled position") |
| | |
| 100-121 | Verfahrensschritte |

## Patentansprüche

1. Antriebssystem in einem Kraftfahrzeug mit zumindest einer zuschaltbaren elektrischen Antriebsmaschine (54), einem Inverter (53) und einer Aktuatoranordnung (1) zur Anbindung der elektrischen Antriebsmaschine (54), wobei ein Inverter (53) Leistungsendstufen (57, 67, 58) für die elektrische Antriebsmaschine (54) und die Aktuatoranordnung (1) enthält, die im gleichen oder unterschiedlichen Spannungsbereich arbeiten, **dadurch gekennzeichnet, dass** die Aktuatoranordnung (1) einen elektromagnetischen Schaltaktuator (2) und eine Klauenkupplung (50) aufweist, wobei ein elektromagnetischer Antrieb (5) über einen Hubmagneten (5a, 5b) eine Schaltstange (9) linear bewegt, die mit einer Schwenkschaltgabel (23) kraftwirksam verbunden ist.

2. Antriebssystem nach Anspruch 1, **dadurch gekennzeichnet, dass** mindestens einer der Spannungsbereiche ein Hochvoltbereich (48V) ist.

3. Antriebssystem nach Anspruch 1 oder 2, **dadurch gekennzeichnet, dass** der Inverter (53) eine Steuerelektronik (56) für die elektrische Antriebsmaschine (54) und die Aktuatoranordnung (1) enthält.

4. Antriebssystem nach Anspruch 1, **dadurch gekennzeichnet, dass** die Schaltstange (9) von mindestens einem Stütz-Gleitelement (10, 11) oder Führungselement (20) umfasst ist, dass sich im Gehäuse (3) des Schaltaktuators (2) gleitend linear bewegt.

5. Antriebssystem nach einem der vorhergehenden Ansprüche, **dadurch gekennzeichnet, dass** die Schaltstange (9) über eine Ankerstange (8) oder direkt am elektromagnetischen Antrieb (5) kraftwirksam angebunden ist.

6. Antriebssystem nach Anspruch 4, **dadurch gekennzeichnet, dass** das Stütz-Gleitelement (10, 11) oder Führungselement (20) einen Anschlag für mindestens eine Pufferfeder (14) bildet.

7. Antriebssystem nach Ansprüche 4 oder 6, **dadurch gekennzeichnet, dass** das Stütz-Gleitelement (10, 11) oder Führungselement (20) einen zusätzlichen Anschlag für eine Rückstellfeder (15) bildet.

8. Antriebssystem nach Ansprüche 6 oder 7 **dadurch gekennzeichnet, dass** die Pufferfeder (14) und/oder die Rückstellfeder (15) als Spiralfedern mit konstanter oder veränderlicher Federrate ausgestaltet sind.

9. Antriebssystem nach Ansprüche 4, 6 oder 7, **dadurch gekennzeichnet, dass** das Stütz-Gleitelement (10, 11) eine Schalthülse (13) für eine Schwenkschaltgabel (23) umfasst oder das Führungselement (20) einteilig mit der Schalthülse (13) ausgebildet ist.

10. Verfahren zur Ansteuerung eines Antriebssystems nach einem der vorhergehenden Ansprüche, **dadurch gekennzeichnet, dass** durch Messung des an der Elektromagnetspule (6) des Schaltaktuators (2) fließenden Spulenstroms in der Steuerelektronik (56) oder auch extern detektiert wird, um die Endposition (36, 39) des Schaltaktuators (2) beim Einkuppeln zu bestimmen.

11. Verfahren nach Anspruch 10 **dadurch gekennzeichnet, dass** eine Verifizierung der Endposition (36, 39) durch Stellen eines Drehmoments des elektrischen Antriebsmotors (54) erfolgt.

12. Verfahren nach Anspruch 10 oder 11 **dadurch gekennzeichnet, dass** durch eine Ansteuerung des elektrischen Antriebsmotors (54) eingeleiteten Anlagewechsel der Zahnflanken von Klauenring (32) und Schaltmuffe (31) einen Zahn-Zahn-Stellung vermieden wird.

13. Verfahren nach Anspruch 10 bis 12 **dadurch gekennzeichnet, dass** die Drehzahlen an Wellen (40, 41) der Klauenkupplung (50) bestimmt und für das Auslegen der Kupplung verwendet werden.

14. Verfahren nach Anspruch 10 bis 13 **dadurch gekennzeichnet, dass** eine Blockade der Zähne durch ein am Schaltaktuator (2) aufgebrachtes Strommuster aufgerüttelt wird.

**Claims**

1. Drive system in a motor vehicle, having at least one activatable electric drive machine (54), having an inverter (53) and having an actuator arrangement (1) for the connection of the electric drive machine (54), wherein an inverter (53) comprises power output stages (57, 67, 58) for the electric drive machine (54) and the actuator arrangement (1), which power output stages operate in the same voltage range or in different voltage ranges, **characterized in that** the actuator arrangement (1) has an electromagnetic switching actuator (2) and a dog clutch (50), wherein an electromagnetic drive (5), by means of a solenoid (5a, 5b), linearly moves a switching rod (9) which is connected in terms of force action to a pivoting switching fork (23).

2. Drive system according to Claim 1, **characterized in that** at least one of the voltage ranges is a high-voltage range (48 V).

3. Drive system according to Claim 1 or 2, **characterized in that** the inverter (53) comprises control electronics (56) for the electric drive machine (54) and the actuator arrangement (1).

4. Drive system according to Claim 1, **characterized in that** the switching rod (9) is surrounded by at least one supporting slide element (10, 11) or guide element (20) which moves linearly in sliding fashion in the housing (3) of the switching actuator (2).

5. Drive system according to one of the preceding claims, **characterized in that** the switching rod (9) is connected in terms of force action to the electromagnetic drive (5) via an armature rod (8) or directly.

6. Drive system according to Claim 4, **characterized in that** the supporting slide element (10, 11) or guide element (20) forms a stop for at least one buffer spring (14).

7. Drive system according to Claim 4 or 6, **characterized in that** the supporting slide element (10, 11) or guide element (20) forms an additional stop for a restoring spring (15).

8. Drive system according to Claim 6 or 7, **characterized in that** the buffer spring (14) and/or the restoring spring (15) are/is designed as spiral springs with a constant or variable spring rate.

9. Drive system according to Claim 4, 6 or 7, **characterized in that** the supporting slide element (10, 11) comprises a switching sleeve (13) for a pivoting switching fork (23), or the guide element (20) is formed in one piece with the switching sleeve (13).

10. Method for controlling a drive system according to one of the preceding claims, **characterized in that**, by measurement of the coil current flowing at the electromagnetic coil (6) of the switching actuator (2) in the control electronics (56), or else externally, a detection is performed in order to determine the end position (36, 39) of the switching actuator (2) during the clutch engagement process.

11. Method according to Claim 10, **characterized in that** a verification of the end position (36, 39) is performed by setting of a torque of the electric drive motor (54).

12. Method according to Claim 10 or 11, **characterized in that** a tooth-on-tooth position is avoided by means of a change in abutting contact of the tooth flanks of the dog ring (32) and switching sleeve (31), said change in abutting contact being initiated through control of the electric drive motor (54).

**13.** Method according to Claims 10 to 12, **characterized in that** the rotational speeds at shafts (40, 41) of the dog clutch (50) are determined and are used for the disengagement of the clutch.

**14.** Method according to Claims 10 to 13, **characterized in that** a blockage of the teeth is shaken free by means of a current pattern applied to the switching actuator (2).

**Revendications**

**1.** Système d'entraînement dans un véhicule automobile, comprenant au moins une machine d'entraînement électrique (54) pouvant être mise en circuit, un inverseur (53) et un agencement d'actionneur (1) pour le raccordement de la machine d'entraînement électrique (54), dans lequel un inverseur (53) comporte des étages de puissance de sortie (57, 67, 58) pour la machine d'entraînement électrique (54) et l'agencement d'actionneur (1) qui fonctionnent dans une plage de tension identique ou différente,
**caractérisé en ce que** l'agencement d'actionneur (1) présente un actionneur de commutation électromagnétique (2) et un accouplement à crabot (50), dans lequel un entraînement électromagnétique (5) déplace de manière linéaire, par l'intermédiaire d'un électroaimant de levage (5a, 5b), une tringle de commutation (9) qui est reliée à effet de force à une fourchette de sélection pivotante (23).

**2.** Système d'entraînement selon la revendication 1, **caractérisé en ce qu'**au moins l'une des plages de tension est une plage haute tension (48V).

**3.** Système d'entraînement selon la revendication 1 ou 2, **caractérisé en ce que** l'inverseur (53) comporte une électronique de commande (56) pour la machine d'entraînement électrique (54) et l'agencement d'actionneur (1).

**4.** Système d'entraînement selon la revendication 1, **caractérisé en ce que** la tringle de commutation (9) est entourée par au moins un élément coulissant de support (10, 11) ou élément de guidage (20) qui se déplace linéairement de manière coulissante dans le boîtier (3) de l'actionneur de commutation (2).

**5.** Système d'entraînement selon l'une quelconque des revendications précédentes, **caractérisé en ce que** la tringle de commutation (9) est raccordée à effet de force à l'entraînement électromagnétique (5) par l'intermédiaire d'une tige d'ancrage (8) ou directement.

**6.** Système d'entraînement selon la revendication 4, **caractérisé en ce que** l'élément coulissant de support (10, 11) ou élément de guidage (20) constitue une butée pour au moins un ressort amortisseur (14).

**7.** Système d'entraînement selon la revendication 4 ou 6, **caractérisé en ce que** l'élément coulissant de support (10, 11) ou élément de guidage (20) constitue une butée supplémentaire pour un ressort de rappel (15).

**8.** Système d'entraînement selon la revendication 6 ou 7, **caractérisé en ce que** le ressort amortisseur (14) et/ou le ressort de rappel (15) sont configurés sous forme de ressorts en spirale à taux d'élasticité constant ou variable.

**9.** Système d'entraînement selon la revendication 4, 6 ou 7, **caractérisé en ce que** l'élément coulissant de support (10, 11) comprend une douille de commutation (13) pour une fourchette de sélection pivotante (23), ou l'élément de guidage (20) est réalisé d'un seul tenant avec la douille de commutation (13).

**10.** Procédé permettant de piloter un système d'entraînement selon l'une quelconque des revendications précédentes, **caractérisé en ce que** par la mesure du courant de bobine circulant au niveau de la bobine d'électroaimant (6) de l'actionneur de commutation (2), une détection a lieu dans l'électronique de commande (56) ou également en externe pour déterminer la position d'extrémité (36, 39) de l'actionneur de commutation (2) au moment de l'accouplement.

**11.** Procédé selon la revendication 10, **caractérisé en ce qu'**une vérification de la position d'extrémité (36, 39) est effectuée en réglant un couple du moteur d'entraînement électrique (54).

**12.** Procédé selon la revendication 10 ou 11, **caractérisé en ce qu'**une position dent sur dent est évitée par un changement de sens des flancs de dent de la bague à crabots (32) et du manchon de commutation (31), déclenché par un pilotage du moteur d'entraînement électrique (54).

**13.** Procédé selon la revendication 10 à 12, **caractérisé en ce que** les vitesses de rotation au niveau des arbres (40, 41) de l'accouplement à crabot (50) sont déterminées et utilisées pour la conception de l'accouplement.

**14.** Procédé selon la revendication 10 à 13, **caractérisé en ce qu'**un blocage des dents est desserré par un motif de courant appliqué au niveau de l'actionneur de commutation (2).

Fig. 2

Fig. 1

24

50

23

27

25, 26

30

31

32

Fig. 3

Y

2

3c

3a

a

3

3b

3d

17

5, 6, 7

4

Fig. 4

EP 3 794 245 B1

Fig. 6

Fig. 5

EP 3 794 245 B1

Fig. 7

Fig. 8

EP 3 794 245 B1

Fig. 10

Fig. 9

Fig. 11

Fig. 12

EP 3 794 245 B1

Fig. 13

EP 3 794 245 B1

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

EP 3 794 245 B1

Fig. 27

Fig. 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011010616 A1

- JP 4061763 B